(19) Europäisches Patentamt

European Patent Office

Office européen des brevets

(11) **EP 1 561 348 B1**

(12) **FASCICULE DE BREVET EUROPEEN**

(45) Date de publication et mention
de la délivrance du brevet:
**12.07.2006 Bulletin 2006/28**

(21) Numéro de dépôt: **03767852.1**

(22) Date de dépôt: **22.10.2003**

(51) Int Cl.:
**H04N 7/30** *(2006.01)* **H04N 17/00** *(2006.01)*

(86) Numéro de dépôt international:
**PCT/FR2003/003132**

(87) Numéro de publication internationale:
**WO 2004/047451 (03.06.2004 Gazette 2004/23)**

(54) **PROCEDE ET SYSTEME DE MESURE DES DEGRADATIONS D UNE IMAGE VI DEO INTRODUITES PAR UN CODAGE A REDUCTION DE DEBIT u . /u**

VERFAHREN UND SYSTEM ZUR MESSUNG VON VIDEOBILDVERSCHLECHTERUNG, HERVORGERUFEN DURCH KODIERUNG ZUR BITRATENREDUKTION

METHOD AND SYSTEM FOR MEASURING VIDEO IMAGE DEGRADATIONS INTRODUCED BY AN ENCODING SYSTEM WITH THROUGHPUT REDUCTION

(84) Etats contractants désignés:
**DE FR GB NL**

(30) Priorité: **15.11.2002 FR 0214329**

(43) Date de publication de la demande:
**10.08.2005 Bulletin 2005/32**

(73) Titulaire: **TDF**
**75732 Paris Cedex 15 (FR)**

(72) Inventeurs:
• **MONTARD, Nathalie**
**f-57000 Metz (FR)**
• **BAINA, Jamal**
**F-54250 Champigneule (FR)**

(74) Mandataire: **de Roquemaurel, Bruno et al**
**Novagraaf Technologies**
**122, rue Edouard Vaillant**
**92593 Levallois Perret Cedex (FR)**

(56) Documents cités:
**EP-A- 1 111 928** **FR-A- 2 769 452**
**FR-A- 2 769 453**

**Description**

La présente invention concerne un procédé et un système de mesure des dégradations d'une image vidéo, introduites par un système de codage à réduction de débit.

Elle s'applique notamment, mais non exclusivement, au domaine des réseaux de diffusion de signaux audiovisuels numériques à bas débit ou à très bas débit, ainsi qu'au domaine de la production de tels signaux. Elle s'applique en particulier à la surveillance de la qualité de service d'un réseau de diffusion de signaux audiovisuels numériques.

La numérisation des signaux vidéo permet de copier, stocker et transmettre ce type d'informations en maintenant une qualité d'image constante. Cependant, la grande quantité d'informations véhiculée par les images vidéo nécessite en pratique l'utilisation de méthodes de compression numérique pour réduire le débit binaire.

Une méthode de compression très répandue dans le domaine de la vidéo est décrite dans la norme ISO/CEI 13918 MPEG2. Cet algorithme est dit de type "avec pertes" car l'image restituée après décodage n'est pas identique à l'original. Cet algorithme est basé sur un découpage de l'image en blocs et sur l'application d'une transformée par exemple de type transformée en cosinus discrète aux pixels de chaque bloc, ce qui permet d'obtenir une représentation fréquentielle de l'amplitude de la luminance des pixels sous la forme d'autant de coefficients que de pixels dans le bloc.

Afin de maintenir une qualité acceptable pour le téléspectateur final, les algorithmes de compression tiennent compte des propriétés de perception du système de vision humain. Cependant, les contraintes de débit imposées par les systèmes de transmission nécessitent l'application de taux de compression qui influent sur la qualité de l'image perçue par le téléspectateur.

Il s'avère que l'importance des dégradations engendrées par le codage dépend à la fois du taux de compression et de la complexité des images. Ces dégradations sont d'autant plus importantes que l'image est complexe en ce qui concerne notamment le mouvement d'objets, la luminosité, et la texture.

Parmi les dégradations qui apparaissent dans les images à la suite de l'application de la technique de codage MPEG2, on peut citer les erreurs granulaires, les déformations de contours, l'apparition de contours dit "exotiques" et les effets de blocs.

Il apparaît donc nécessaire d'évaluer de façon permanente la qualité des images diffusées. Il existe à cet effet des méthodes d'évaluation subjectives, largement utilisées, faisant appel à l'appréciation humaine. Ces méthodes sont toutefois lourdes à mettre en oeuvre et ne peuvent pas être utilisées en temps réel sur un réseau de diffusion en fonctionnement.

Il existe également des méthodes dites "avec référence" basées sur la comparaison de l'image dont on veut évaluer la qualité avec une image de référence. L'image de référence est en général celle qui correspond à l'image à analyser avant son codage et/ou sa transmission. Cette solution s'avère peu pratique du fait qu'elle nécessite un accès à une ou plusieurs images de référence. En outre, dans le cas où l'image vidéo est transmise, il se pose le problème du transport de l'image de référence vers le lieu de réception de l'image à analyser.

D'autres solutions dites "sans référence" permettent d'analyser automatiquement des images sans avoir à effectuer une comparaison avec des images de référence. L'efficacité et la robustesse de chacune de ces solutions résident dans la méthode employée pour mesurer des paramètres relatifs à la qualité de l'image. Certaines de ces solutions sont basées sur une détection de l'effet de bloc effectuée dans le domaine spatial par des calculs de gradients aux frontières des blocs. Pour éviter de confondre la frontière d'un objet de l'image avec un effet de bloc, le gradient est comparé avec des gradients intra bloc. L'effet de bloc est détecté à l'aide d'un critère de décision appliqué au comportement des gradients inter et intra bloc.

Ainsi, la société Rohde et Schwarz a développé une méthode de détection d'effet de blocs consistant à calculer pour chaque macro bloc de l'image un vecteur de gradient horizontal, et à calculer une moyenne sur toute l'image de chaque composante du vecteur. Les variations au cours du temps des composantes de ce vecteur permettent de mettre en évidence des composantes au comportement marginal qui représentent les frontières de blocs dégradées par la transformée du traitement de compression. La détection de ces composantes marginales permet de déterminer un critère de détection d'effet de bloc représentatif de la dégradation de l'image.

Ce principe de calcul de gradient est également décrit dans le brevet FR 2 805 429 déposé par la Demanderesse. Cette demande de brevet décrit un procédé basé sur la combinaison d'une image de gradient binarisée et d'une image de "pseudo vecteurs" de mouvement, calculée à partir d'au moins deux images successives. La combinaison de ces deux images permet d'estimer un taux de faux contours dans l'image, utilisé ensuite pour évaluer une note de qualité.

Dans le brevet FR 2 785 116 déposé par la Demanderesse, les gradients calculés sur toute l'image à analyser sont soumis à des filtres psychovisuels qui traduisent l'effet de masquage contextuel. Un taux de frontières de blocs visibles détectés est ensuite calculé en recherchant une pseudo périodicité parmi les gradients de forte valeur, la qualité de l'image étant évaluée sur la base de ce taux.

Il s'avère que les méthodes basées sur le calcul de gradients appliquent des filtres pour ne s'intéresser qu'à un certain type de contenu de l'image : frontières ou hautes fréquences. Ces méthodes ne permettent donc d'analyser qu'une partie de l'information contenue dans l'image. Il en résulte que leur fiabilité en terme de détection des dégradations de l'image se trouve limitée. En outre, les procédés basés sur l'usage des gradients pour l'estimation de frontière ou la détection de contours sur l'image, sont relativement sensibles au bruit, ce qui affecte la fiabilité de l'estimation de la qualité du contenu intrinsèque de l'image.

Par ailleurs, les méthodes basées sur le calcul de moyenne sur l'image entière réduisent de manière drastique l'importance des dégradations localisées dans une partie de l'image, ce qui rend difficile la détection de telles dégradations localisées, et donc affecte la fiabilité de l'évaluation de la qualité de l'image.

Pour réduire ces inconvénients, certaines méthodes prévoient d'analyser plusieurs images successives. Ces méthodes ne sont donc pas exploitables pour analyser une image isolée hors du cadre de la vidéo.

La présente invention a pour but de supprimer ces inconvénients. Cet objectif est atteint par la prévision d'un procédé de mesure des dégradations d'une image numérisée, introduites par un codage de l'image consistant à décomposer l'image en blocs de codage suivant une grille de codage et à appliquer sur des données de pixels de chaque bloc un traitement de codage faisant intervenir un calcul de transformée par blocs et un calcul de transformée par bloc inverse. Selon l'invention, ce procédé comprend des étapes consistant à :

- déterminer la grille de codage de l'image codée, afin de retrouver la décomposition en blocs de codage de l'image, utilisée lors du codage de l'image,
- décaler la grille de codage par rapport à l'image codée, de manière à définir une décomposition de l'image en blocs d'analyse couvrant chacun une frontière entre deux blocs de codage adjacents,
- appliquer le calcul de transformée par bloc aux données de pixels de l'image codée en utilisant la grille de codage décalée pour obtenir des coefficients transformés pour chaque bloc d'analyse défini par la grille de codage décalée,
- extraire des coefficients transformés, des coefficients susceptibles d'être affectés par un effet de bloc résultant du codage de l'image,
- appliquer aux coefficients transformés extraits le calcul de transformée par bloc inverse pour déterminer des données de pixels de chaque bloc d'analyse,
- estimer pour chaque bloc d'analyse un indicateur de dégradation due aux effets de bloc, à partir des données de pixels de l'image codée et des données de pixels de chaque bloc d'analyse, obtenues par le calcul de transformée inverse, et
- déterminer une mesure de dégradation de l'image en faisant la somme des indicateurs de dégradation de chaque bloc d'analyse.

Selon une particularité de l'invention, l'estimation d'un indicateur de dégradation pour chaque bloc d'analyse comprend les étapes consistant à :

- calculer à partir des données de pixels obtenus pour le bloc d'analyse une moyenne de différences inter pixel au niveau de la frontière inter bloc de la grille de codage, couverte par le bloc d'analyse,
- calculer une moyenne et un écart type portant sur les pixels des deux blocs adjacents de la grille de codage, partiellement couverts par le bloc d'analyse,
- calculer un facteur de pondération en fonction de la moyenne et de l'écart type obtenus pour le bloc d'analyse, et
- calculer une activité spatiale du bloc d'analyse à partir d'activités spatiales déterminées pour chacun des deux blocs adjacents de la grille de codage partiellement couverts par le bloc d'analyse,
- l'indicateur de dégradation du bloc d'analyse étant déterminé en fonction de la moyenne calculée des différences inter pixel, du facteur de pondération et de l'activité spatiale du bloc.

Avantageusement, l'indicateur de dégradation d'un bloc d'analyse est obtenu à l'aide de la formule suivante :

$$\upsilon_{i,j} = \frac{\Delta I_{i,j} w_{i,j}}{1 + \psi \left| ACT_{i,j} \right|}$$

dans laquelle $\Delta I_{i,j}$ est la moyenne de différences inter pixel au niveau de la frontière inter bloc de la grille de codage, couverte par le bloc d'analyse, $w_{i,j}$ est le facteur de pondération, $\psi$ est une constante prédéfinie, et $ACT_{i,j}$ est l'activité spatiale du bloc d'analyse.

Selon une autre particularité de l'invention, le calcul de transformée est appliqué aux blocs de codage de l'image codée, les activités spatiales déterminées pour chacun des deux blocs de codage étant obtenues à partir des coefficients transformés de chacun des deux blocs de codage.

Avantageusement, les activités spatiales déterminées pour chacun des deux blocs de codage sont obtenues à partir des formules suivante :

$$ACT_{i,j}^{G} = \frac{1}{1+DC_{i,j}^{G}} \sqrt{\sum_{\substack{u,v=0 \\ u+v\neq 0}}^{7} \left[ AC_{i,j}^{G}(u,v)Nill(u,v) \right]^2}$$

$$ACT_{i,j}^{D} = \frac{1}{1+DC_{i,j}^{D}} \sqrt{\sum_{\substack{u,v=0 \\ u+v\neq 0}}^{7} \left[ AC_{i,j}^{D}(u,v)Nill(u,v) \right]^2} \, ,$$

dans lesquelles $DC_{i,j}^{G}$ et $AC_{i,j}^{G}(u,v)$, et respectivement $DC_{i,j}^{D}$ et $AC_{i,j}^{D}(u,v)$ sont les coefficients transformés de chacun des deux blocs de codage adjacents partiellement couverts par le bloc d'analyse, et Nill(u,v) est une fonction de masquage modélisant un masquage par voisinage.

De préférence, la moyenne et l'écart type calculés pour chaque bloc d'analyse sont déterminés à partir des coefficients transformés de chacun des deux blocs de codage adjacents partiellement couverts par le bloc d'analyse.

Selon une autre particularité de l'invention, le facteur de pondération est obtenu par la formule suivante :

$$w_{i,j}(\mu_{i,j}, \sigma_{i,j}, \zeta) = \begin{cases} \lambda \ln\left( 1 + \dfrac{\sqrt{\mu_{i,j}}}{1+\sigma_{i,j}} \right) & \text{si } \mu_{i,j} \leq \zeta \\ \ln\left( 1 + \dfrac{\sqrt{255-\zeta}}{1+\sigma_{i,j}} \right) & \text{sinon,} \end{cases}$$

dans laquelle

$$\lambda = \frac{\ln\left( 1 + \dfrac{\sqrt{255-\zeta}}{1+\sigma_{i,j}} \right)}{\ln\left( 1 + \dfrac{\sqrt{\zeta}}{1+\sigma_{i,j}} \right)} \, ,$$

$\mu_{i,j}$ et $\sigma_{i,j}$ sont respectivement la moyenne et l'écart type calculés pour chaque bloc d'analyse, et $\xi$ est un paramètre correspondant au maximum de la sensibilité de l'oeil humain.

Selon encore une autre particularité de l'invention, on effectue une sélection des blocs d'analyse susceptibles de contenir un effet de bloc, préalablement à l'estimation d'un indicateur de dégradation pour chaque bloc d'analyse.

Avantageusement, la sélection préalable comprend une étape consistant à écarter les blocs d'analyse dont les coefficients de transformés extraits sont supérieurs à un seuil prédéfini.

De préférence, la sélection préalable comprend une étape consistant à sélectionner les blocs d'analyse ayant, au niveau de la frontière inter bloc de la grille de codage, couverte par le bloc d'analyse, des pixels présentant une énergie représentant une proportion significative de l'énergie du bloc.

Selon encore une autre particularité de l'invention, le décalage de la grille de codage est effectué horizontalement par rapport à l'image codée.

Alternativement, le décalage de la grille de codage est effectué verticalement par rapport à l'image codée.

De préférence, le calcul de transformée par blocs est un calcul de transformée en cosinus discrète.

L'invention concerne également un système de mesure des dégradations d'une image numérisée, introduites par un codage de l'image, comprenant des moyens de calcul pour mettre en oeuvre le procédé défini ci-avant.

Un mode de réalisation préféré de l'invention sera décrit ci-après, à titre d'exemple non limitatif, avec référence aux dessins annexés dans lesquels :

La figure 1 représente schématiquement le système de mesure selon l'invention, intégré dans une chaîne de traitement d'image ;

La figure 2 montre plus en détail le système de mesure représenté sur la figure 1 ;

La figure 3 montre deux blocs de pixels de l'image pour illustrer le procédé selon l'invention ;

La figure 4 montre plus en détail une partie du système représenté sur la figure 2 ;

La figure 5 montre une courbe représentant une fonction de pondération utilisée par le procédé selon l'invention ;

La figure 6 montre d'autres courbes illustrant une autre fonction de pondération utilisée par le procédé selon l'invention ;

La figure 7 montre des courbes de variation de la mesure de dégradation obtenue conformément au procédé selon l'invention, appliquée à une séquence d'images.

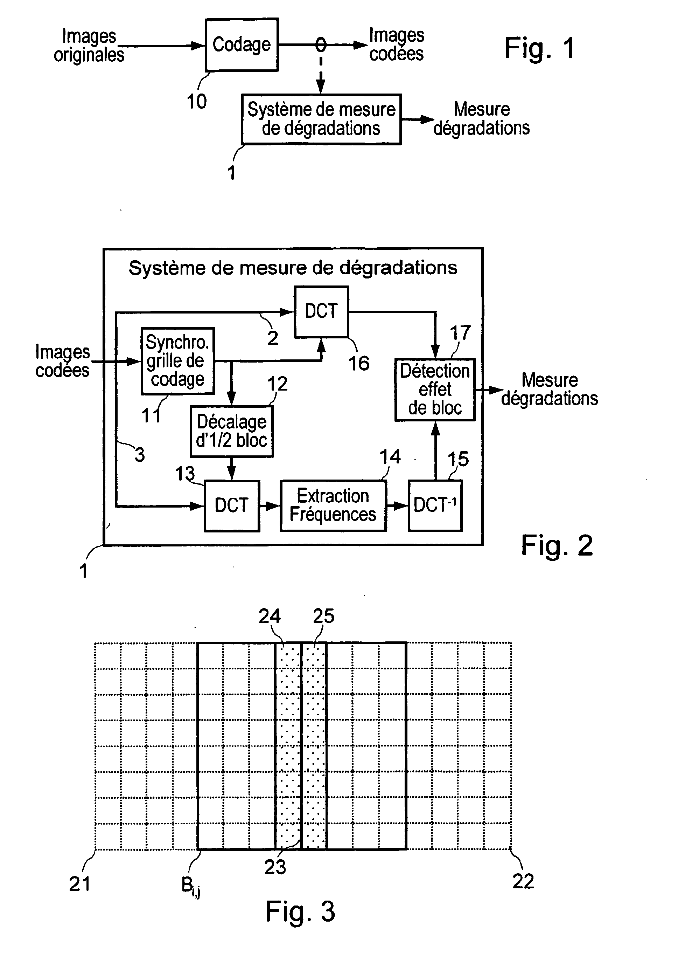

La figure 1 représente un système de mesure 1 de dégradations selon l'invention, qui est destiné à être utilisé comme une sonde susceptible d'être appliquée en tout point d'une chaîne de traitement d'images numériques, telle qu'une chaîne de diffusion ou de production de signal vidéo.

Le système de mesure 1 est plus particulièrement conçu pour mesurer la qualité des images en sortie d'un système de codage 10 à réduction de débit respectant la norme MPEG 2. A cet effet, il se base sur une combinaison de filtrage fréquentiel et temporel.

Ce système est applicable à chaque fois qu'il est nécessaire d'identifier des défauts de codage d'un signal vidéo numérique, notamment afin de déterminer le débit convenable pour une séquence d'images donnée, en fonction de la qualité attendue.

Le principe de codage selon la norme MPEG 2 consiste à décomposer l'image numérisée en blocs de N x N pixels (N étant par exemple égal à 8) selon une grille de codage, et d'appliquer à chaque bloc une transformée en cosinus discrète (DCT : Discrete Cosine Transform) permettant de passer du domaine spatial au domaine fréquentiel, puis d'annuler certaines composantes de la transformée correspondant à des fréquences élevées, avant d'appliquer une transformation DCT inverse pour repasser dans le domaine spatial, c'est-à-dire récupérer les pixels du bloc correspondant.

Le traitement de transformée en cosinus discrète consiste à appliquer à chaque bloc $B_{i,j}$ de N x N pixels de l'image un calcul de coefficients de transformée AC et DC obtenus à l'aide des formules suivantes :

$$DC_{i,j} = F_{i,j}(0,0) = \frac{2}{N^2} \sum_{x=0}^{N-1} \sum_{y=0}^{N-1} f_{i,j}(x,y) \tag{1}$$

et

$$AC_{i,j}(u,v) = F_{i,j}(u,v), \text{ avec } u + v \neq 0 \tag{2}$$

dans lesquelles :

$$F_{i,j}(u,v) = \frac{4}{N^2} \sum_{x=0}^{N-1} \sum_{y=0}^{N-1} f_{i,j}(x,y) \cos\left(\pi u \left(\frac{2x+1}{2N}\right)\right) \cos\left(\pi v \left(\frac{2y+1}{2N}\right)\right), \tag{3}$$

$f_{i,j}(x,y)$ représente la luminance du pixel au point (x, y) dans le bloc $B_{i,j}$, x et y étant les index de position respectivement horizontale et verticale du pixel dans le bloc $B_{i,j}$, et u et v sont compris entre 1 et N-1 et représentent respectivement les index de la fréquence spatiale horizontale et verticale, respectivement, et

$$c(0) = \frac{1}{\sqrt{2}} \text{ et } c(u) = 1 \text{ si } u \neq 0.$$

Le traitement inverse de la transformée en cosinus discrète consiste à appliquer aux coefficients $DC_{i,j}$ et $AC_{i,j}(u,v)$ de chaque bloc $B_{i,j}$ la formule suivante :

$$I_{i,j}(x,y) = \frac{4}{N^2} \sum_{u=0}^{N-1} \sum_{v=0}^{N-1} c(u)c(v)F_{i,j}(u,v)\cos\left(\pi u\left(\frac{2x+1}{2N}\right)\right)\cos\left(\pi v\left(\frac{2y+1}{2N}\right)\right). \quad (4)$$

Sur la figure 2, le système de mesure 1 comprend un module de synchronisation 11 permettant de synchroniser chaque image codée à traiter avec sa grille de codage, c'est-à-dire la décomposition de l'image en blocs de N x N pixels. Un exemple de traitement de synchronisation susceptible d'être effectué par ce module est décrit dans la demande de brevet FR 2 769 452 déposée par la Demanderesse. Ce traitement de synchronisation permet en fait de repérer dans l'image la décomposition en blocs utilisée par le traitement précédent de codage effectué par le système 10, et donc de déterminer à quel bloc de codage $B_{i,j}$ appartient chaque pixel de l'image.

L'image codée et sa décomposition en blocs sont appliqués à deux branches de traitement 2, 3, la première branche 2 comprenant un module 16 de transformée en cosinus discrète, et la seconde branche 3 comprenant tout d'abord un module 12 de décalage horizontal d'un demi bloc de la grille de codage par rapport à l'image. La figure 3 illustre ce décalage horizontal d'un demi bloc, en montrant un bloc $B_{i,j}$ de 8 x 8 pixels décalé horizontalement d'un demi bloc par rapport à la grille de codage illustrée par les blocs 21 et 22 adjacents.

Dans la seconde branche de traitement 3, l'image codée et la grille de décodage décalée en sortie du module de décalage 12 sont appliquées à l'entrée d'un module 13 de transformée en cosinus discrète. Un module d'extraction 14 de fréquences horizontales traite ensuite les coefficients de transformée issus du module 13. Ce module consiste en fait à ne conserver dans le domaine fréquentiel que les fréquences (coefficients $AC_{i,j}(u,v)$ et $DC_{i,j}$) susceptibles de rendre visible un effet de bloc vertical. Dans le cas où N=8, on peut ainsi estimer que doivent être conservés uniquement les coefficients $DC_{i,j}$, $AC_{i,j}(u,v)$ tel que :

$0 \leq u < 8$ si $v = 0$,

$2 \leq u < 8$ si $v = 1$, et

$6 \leq u < 8$ si $v = 2$.

Les coefficients conservés $AC_{i,j}(u,v)$ et $DC_{i,j}$ sont ensuite traités par un module 15 de transformation DCT inverse pour récupérer les informations spatiales $I_{i,j}(x,y) = I(8i+x, 8j+y)$ relatives aux fréquences conservées, obtenues à l'aide de la formule (4). On peut à cet effet se limiter à la quatrième et la cinquième colonne 24, 25 concernées par l'effet de bloc dû au codage, et qui correspondent à la frontière 23 entre les blocs 21 et 22 de la grille de codage sur la figure 3.

En sortie de la branche 3, on dispose donc des données de pixel I(8i+x, 8j+3) et I(8i+x, 8j+4) de toute l'image, i et j étant les index des blocs décalés de l'image selon la grille de codage décalée obtenue en sortie du module de décalage 12. En sortie de la branche 2, on dispose des coefficients $DC_{i,j}$ et $AC_{i,j}(u,v)$ de chaque bloc de l'image relatifs à la grille de codage en sortie du module de synchronisation 11. Pour chaque bloc $B_{i,j}$ décalé, on dispose des coefficients $DC^G_{i,j}$ et $AC^G_{i,j}(u,v)$ du bloc de gauche et 21 des coefficients DCÔ et AC;D(u,v) du bloc de droite 22.

Les données issues des deux branches de traitement 2 et 3, c'est-à-dire en sortie des modules 16 et 15, sont appliquées en entrée d'un module 17 d'évaluation de l'effet de bloc.

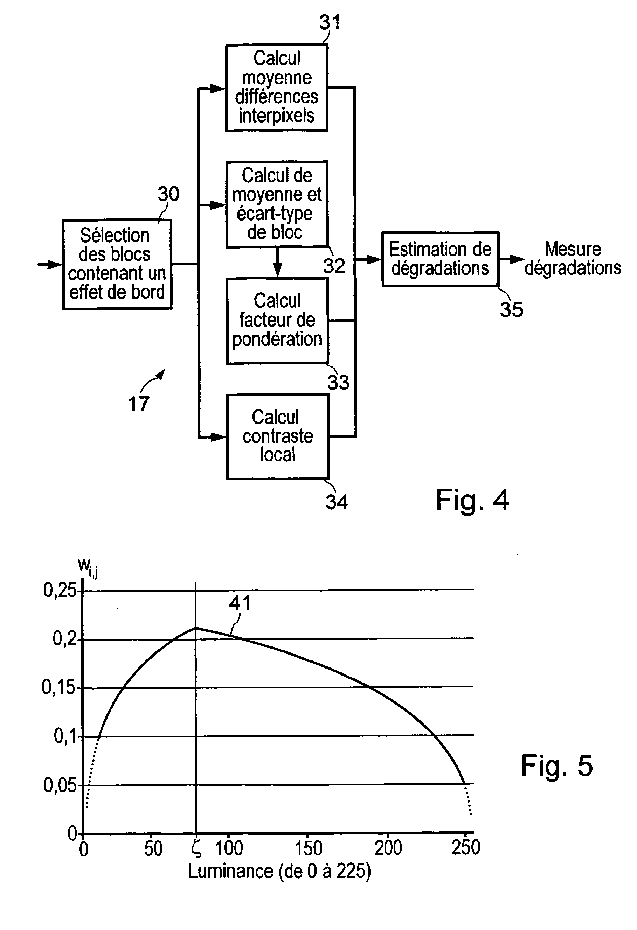

Sur la figure 4, les données en entrée du module 17 sont appliquées aux modules suivants :

- un module 31 de calcul de moyenne des différences inter pixels à la frontière verticale 23 de chaque paire de blocs adjacents 21, 22 de l'image codée ;
- un module 32 de calcul de moyenne et d'écart type de la luminance de chaque bloc, et
- un module 34 de calcul de contraste local.

Pour évaluer la moyenne des différences inter pixels sur chaque bloc décalé $B_{i,j}$, le module 31 applique aux données de pixel issues de la seconde branche 3 la formule suivante :

$$\Delta_{i,j} = \frac{1}{8} \sum_{k=0}^{7} \left| I(8i+k, 8j+4) - I(8i+k, 8j+3) \right| \quad (5)$$

La moyenne ainsi calculée décrit en fait le comportement de l'opérateur gradient à la frontière verticale 23 de deux blocs adjacents 21, 22 issus de la grille de codage de l'image.

Dans le module 32, une moyenne $\mu_{i,j}$ et un écart-type $\sigma_{i,j}$ de luminance sont estimés pour chaque bloc $B_{i,j}$ sur les deux blocs adjacents 21, 22 correspondants de la grille de codage. On pourra par exemple utiliser les coefficients AC et DC des blocs de codage dans le domaine DCT fournis par la première branche 2 selon les formules suivantes :

$$\mu_{i,j} = \frac{1}{2}(DC_{i,j}^G + DC_{i,j}^D) \qquad (6)$$

et

$$\sigma_{i,j} = \frac{1}{2}\left(\sqrt{\frac{1}{63}\sum_{\substack{u,v=0 \\ u+v\neq 0}}^{7}\left[AC_{i,j}^G(u,v)\right]^2} + \sqrt{\frac{1}{63}\sum_{\substack{u,v=0 \\ u+v\neq 0}}^{7}\left[AC_{i,j}^D(u,v)\right]^2}\right) \qquad (7)$$

Bien entendu, la moyenne $\mu_{i,j}$ et l'écart type $\sigma_{i,j}$ peuvent également être obtenus directement à partir des pixels des blocs 21, 22 correspondant à chaque bloc $B_{i,j}$, à l'aide de formules classiques de calcul de moyenne et d'écart type.

Les moyennes et écarts types calculés par le module 32 sont ensuite appliqués à un module 33 de calcul d'un facteur de pondération $W_{i,j}(\mu_{i,j}, \sigma_{i,j} \xi)$ pour chaque bloc $B_{i,j}$. Pour calculer ce facteur de pondération, le module 33 applique la fonction de pondération définie par la formule suivante :

$$w_{i,j}(\mu_{i,j}, \sigma_{i,j}, \zeta) = \begin{cases} \lambda \ln\left(1 + \dfrac{\sqrt{\mu_{i,j}}}{1+\sigma_{i,j}}\right) & \text{si } \mu_{i,j} \leq \zeta \\ \ln\left(1 + \dfrac{\sqrt{255-\zeta}}{1+\sigma_{i,j}}\right) & \text{sinon,} \end{cases} \qquad (8)$$

où

$$\lambda = \frac{\ln\left(1 + \dfrac{\sqrt{255-\zeta}}{1+\sigma_{i,j}}\right)}{\ln\left(1 + \dfrac{\sqrt{\zeta}}{1+\sigma_{i,j}}\right)} \qquad (9)$$

et $\zeta$ est un paramètre correspondant au maximum de la sensibilité de l'oeil.

Cette fonction de pondération est décrite dans la publication "A Generalized Block-Edge Impairment Metric for Video Coding" de H.R. Wu et M. Yuen, IEEE Signal Processing Letters, Vol. 4, N°11, Novembre 1997. Toutefois, la fonction de pondération décrite dans cette publication présente une discontinuité au point $\mu_{i,j} = \zeta$ lorsque l'écart type $\sigma_{i,j}$ est non nul. Cette fonction a donc été adaptée par le procédé selon l'invention pour être continue en ce point.

La figure 5 illustre cette fonction de pondération sous la forme d'une courbe 41 en fonction du niveau de gris ou de la luminance moyenne $u_{i,j}$ des pixels du bloc, dans le cas où $\zeta$ est choisi égal à 81, ce qui correspond au maximum de la sensibilité de l'oeil humain, et où $\sigma$ est égal à 20.

Le calcul du contraste local effectué par le module 34 consiste à estimer l'activité spatiale $ACT_{i,j}$ de chaque bloc $B_{i,j}$ dans le domaine transformée, à partir des coefficients $DC_{i,j}$ et $AC_{i,j}$, les coefficients $AC_{i,j}$ étant pondérés par une fonction de masquage pour modéliser le masquage par le voisinage. L'activité spatiale $ACT_{i,j}$ de chaque bloc $B_{i,j}$ est ainsi estimée en appliquant la formule suivante :

$$ACT_{i,j} = \frac{1}{2}(ACT_{i,j}^{G} + ACT_{i,j}^{D}) \qquad (10)$$

où

$$ACT_{i,j}^{G} = \frac{1}{1+DC_{i,j}^{G}} \sqrt{\sum_{\substack{u,v=0 \\ u+v \neq 0}}^{7} \left[ AC_{i,j}^{G}(u,v)Nill(u,v) \right]^{2}} \qquad (11)$$

et

$$ACT_{i,j}^{D} = \frac{1}{1+DC_{i,j}^{D}} \sqrt{\sum_{\substack{u,v=0 \\ u+v \neq 0}}^{7} \left[ AC_{i,j}^{D}(u,v)Nill(u,v) \right]^{2}}, \qquad (12)$$

dans laquelle Nill(u,v) est la fonction de masquage qui est par exemple celle décrite dans le document "A Visual Model Weighted Cosine Transform for Image Compression and Quality Assessment", de N. B. Nill, IEEE Transactions on Communications, Vol. COM-33, N° 6, Juin 1985.

Dans ce document, la fonction de masquage, est donnée par la formule suivante :

$$Nill(u,v) = A(\omega)H(\omega) \qquad (13)$$

où $\omega = \sqrt{u^{2}+v^{2}}$ représente la fréquence radiale exprimée en cycles par degré (u et v $\in$ [0, N-1]),

$$A(\omega) = \sqrt{\frac{1}{4} + \frac{1}{\pi^{2}} \left[ \ln\left( \frac{2\pi\omega}{\alpha} + \sqrt{\frac{4\pi^{2}\omega^{2}}{\alpha^{2}} + 1} \right) \right]^{2}}, \qquad (14)$$

$$H(\omega) = (0.31 + 0.69\omega)e^{-0.29\omega}, \qquad (15)$$

et $\alpha$ est communément égal à 11,636 deg$^{-1}$ pour un traitement de la luminance sur 8 bits.

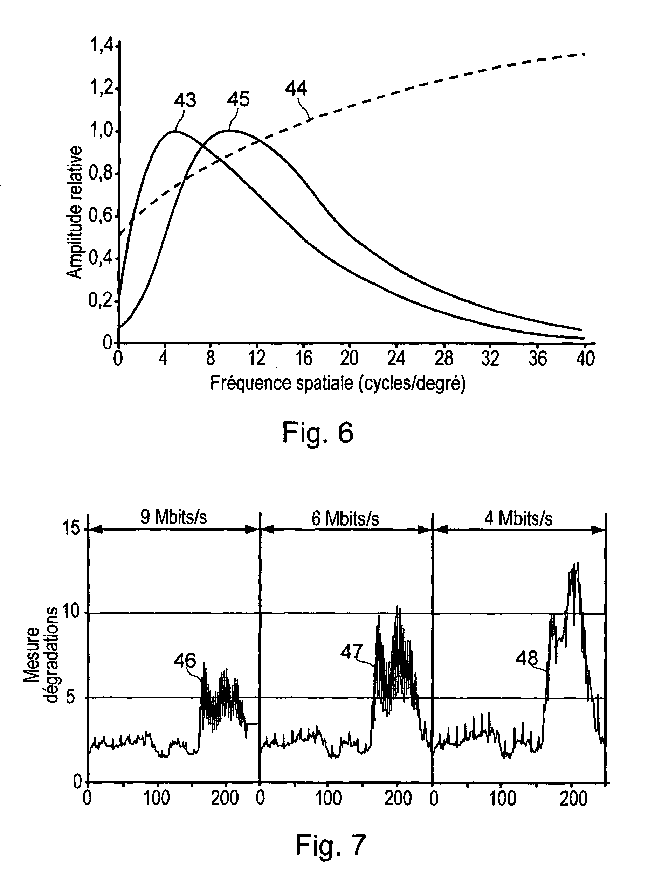

La figure 6 illustre cette fonction de pondération en représentant en fonction de la fréquence spatiale $\omega$, la courbe 43 de variation de H($\omega$), la courbe 44 de variation de A($\omega$) et la courbe 45 de variation de la fonction Nill($\omega$).

Dans les formules (11) et (12), la normalisation par le coefficient DC permet de considérer l'adéquation au contraste local, conformément à la loi de Weber, et l'unité est ajoutée au dénominateur pour que la fonction soit continue en zéro.

Les résultats des calculs effectués par les modules 31, 33 et 34 sont enfin appliqués à un module 35 d'évaluation de la dégradation u de l'image du fait de l'effet de bord résultant du codage. Pour estimer une mesure de dégradation d'image, ce module effectue le calcul suivant :

$$\upsilon = \sum_{i,j} \upsilon_{i,j} \qquad (16)$$

où :

$$\upsilon_{i,j}=\frac{\Delta I_{i,j}w_{i,j}(\mu_{i,j},\sigma_{i,j},\zeta)}{1+\psi|ACT_{i,j}|} \qquad\qquad (17)$$

représente l'impact des effets de bloc sur le bloc $B_{i,j}$ et $\psi$ est une constante déterminée expérimentalement qui permet d'ajuster l'importance attribuée à l'activité spatiale par rapport à la moyenne pondérée des différences inter pixels.

En fait, la mesure de dégradation u estimée par ce module correspond à un indicateur de visibilité par l'oeil humain des dégradations dues à l'effet de bloc.

La figure 7 montre sous la forme de courbes 46, 47, 48, les variations de cette mesure en fonction du numéro d'image dans une séquence d'images vidéo, respectivement pour des débits de 9, 6 et 4 Mbits/s.

Ces courbes montrent que les dégradations des images sont amplifiées au fur et à mesure que l'on réduit le débit. Le codage grossier par quantification des coefficients DCT provoque donc l'apparition de l'effet de bloc. La partie de la séquence d'images où la mesure de dégradation est élevée correspond à des images dont le contenu spatial et temporel évolue brutalement.

Pour optimiser les traitements effectués par le module 17, on peut soumettre les données de bloc en entrée à une sélection à l'aide d'un module de sélection des blocs $B_{i,j}$ susceptibles de contenir un effet de bloc. A cet effet, ce module compare l'énergie des colonnes centrales 24 et 25 de chaque bloc $B_{i,j}$ avec l'énergie du bloc. Le bloc est retenu pour l'estimation de la dégradation si l'énergie des colonnes 24 et 25 représente une proportion significative, par exemple supérieure à 25%, de l'énergie du bloc. Avant d'effectuer cette sélection, on peut également écarter les blocs dont les coefficients DCT retenus par le module d'extraction 14 sont inférieurs à un seuil prédéfini, par exemple voisin de zéro.

Il est à noter que le traitement qui vient d'être décrit est conçu pour détecter un effet de bloc vertical. Bien entendu, ce traitement peut être modifié d'une manière évidente pour détecter un effet de bloc horizontal. Il suffit pour cela d'effectuer dans le module 12 un décalage vertical d'un demi bloc, puis de sélectionner dans le module 14 d'extraction de fréquences, les fréquences susceptibles d'être affectées par un effet de bloc horizontal, et enfin de ne conserver parmi les pixels reconstitués dans le module 15 que les pixels des quatrièmes et cinquièmes lignes du bloc décalé correspondant à la frontière horizontale entre les deux blocs non décalés adjacents, correspondant au bloc décalé.

On pourrait également effectuer en parallèle des traitements de détection d'effets de bloc verticaux et horizontaux et d'utiliser conjointement les résultats fournis par ces deux traitements dans le module 35 par exemple.

Après comparaison des mesures objectives obtenues par le procédé et le système selon l'invention, aux notations effectuées lors de tests subjectifs par des panels de personnes représentatives, on peut remarquer une forte corrélation entre les mesures objectives et les mesures subjectives, ce qui assure de l'efficacité du procédé et système selon l'invention.

## Revendications

1. Procédé de mesure des dégradations d'une image numérisée, introduites par un codage de l'image consistant à décomposer l'image en blocs de codage suivant une grille de codage et à appliquer sur des données de pixels de chaque bloc un traitement de codage faisant intervenir un calcul de transformée par blocs et un calcul de transformée par bloc inverse,
**caractérisé en ce qu'**il comprend des étapes consistant à :

   - déterminer (11) la grille de codage de l'image codée, afin de retrouver la décomposition en blocs de codage de l'image, utilisée lors du codage de l'image,
   - décaler (12) la grille de codage par rapport à l'image codée, de manière à définir une décomposition de l'image en blocs d'analyse ($B_{i,j}$), couvrant chacun une frontière (23) entre deux blocs de codage (21, 22) adjacents,
   - appliquer (13) le calcul de transformée par bloc aux données ($f_{i,j}(x,y)$) de pixels de l'image codée en utilisant la grille de codage décalée pour obtenir des coefficients transformés ($DC_{i,j}$, $AC_{i,j}(u,v)$) pour chaque bloc d'analyse ($B_{i,j}$) défini par la grille de codage décalée,
   - extraire (14) des coefficients transformés, des coefficients susceptibles d'être affectés par un effet de bloc résultant du codage de l'image,
   - appliquer (15) aux coefficients transformés extraits le calcul de transformée par bloc inverse pour déterminer des données ($I_{i,j}(x,y)$) de pixels de chaque bloc d'analyse,
   - estimer (17) pour chaque bloc d'analyse un indicateur ($\upsilon_{i,j}$) de dégradation due aux effets de bloc, à partir des données ($f_{i,j}(x,y)$) de pixels de l'image codée et des données de pixels ($I_{i,j}(x,y)$) de chaque bloc d'analyse, obtenues par le calcul de transformée inverse, et
- déterminer (17) une mesure de dégradation (u) de l'image à partir des indicateurs de dégradation ($v_{i,j}$) de chaque bloc d'analyse.

2. Procédé selon la revendication 1,
**caractérisé en ce que** l'estimation d'un indicateur de dégradation ($v_{i,j}$) pour chaque bloc d'analyse ($B_{i,j}$) comprend les étapes consistant à :

- calculer à partir des données ($I_{i,j}(x,y)$) de pixels obtenus pour le bloc d'analyse une moyenne de différences inter pixel ($\Delta I_{i,j}$) au niveau de la frontière (23) inter bloc de la grille de codage, couverte par le bloc d'analyse,
- calculer une moyenne ($\mu_{i,j}$) et un écart type ($\sigma_{i,j}$) portant sur les pixels des deux blocs (21, 22) adjacents de la grille de codage, partiellement couverts par le bloc d'analyse,
- calculer un facteur de pondération ($w_{i,j}$) en fonction de la moyenne et de l'écart type obtenus pour le bloc d'analyse, et
- calculer une activité spatiale ($ACT_{i,j}$) du bloc d'analyse à partir d'activités spatiales ($ACT^{G}_{i,j}$ $ACT^{D}_{i,j}$) déterminées pour chacun des deux blocs (21, 22) adjacents de la grille de codage partiellement couverts par le bloc d'analyse,

l'indicateur de dégradation du bloc d'analyse étant déterminé en fonction de la moyenne calculée des différences inter pixel, du facteur de pondération et de l'activité spatiale du bloc.

3. Procédé selon la revendication 2,
**caractérisé en ce que** l'indicateur de dégradation d'un bloc d'analyse est obtenu à l'aide de la formule suivante :

$$v_{i,j} = \frac{\Delta I_{i,j} w_{i,j}}{1 + \psi \left| ACT_{i,j} \right|}$$

dans laquelle $\Delta I_{i,j}$ est la moyenne de différences inter pixel au niveau de la frontière (23) inter bloc de la grille de codage, couverte par le bloc d'analyse, $w_{i,j}$ est le facteur de pondération, $\psi$ est une constante prédéfinie, et $ACT_{i,j}$ est l'activité spatiale du bloc d'analyse.

4. Procédé selon la revendication 2 ou 3,
**caractérisé en ce que** le calcul de transformée est appliqué aux blocs de codage de l'image codée, les activités spatiales ($ACT^{G}_{i,j}$, $ACT^{D}_{i,j}$) déterminées pour chacun des deux blocs de codage (21, 22) étant obtenues à partir des coefficients transformés ($DC_{i,j}$, $AC_{i,j}(u,v)$) de chacun des deux blocs de codage.

5. Procédé selon la revendication 4,
**caractérisé en ce que** les activités spatiales ($ACT^{G}_{i,j}$, $ACT^{D}_{i,j}$) déterminées pour chacun des deux blocs de codage (21, 22) sont obtenues à partir des formules suivantes :

$$ACT^{G}_{i,j} = \frac{1}{1 + DC^{G}_{i,j}} \sqrt{\sum_{\substack{u,v=0 \\ u+v \neq 0}}^{7} \left[ AC^{G}_{i,j}(u,v) Nill(u,v) \right]^2}$$

$$ACT^{D}_{i,j} = \frac{1}{1 + DC^{D}_{i,j}} \sqrt{\sum_{\substack{u,v=0 \\ u+v \neq 0}}^{7} \left[ AC^{D}_{i,j}(u,v) Nill(u,v) \right]^2} \, ,$$

dans lesquelles $DC^{G}_{i,j}$ et $AC^{G}_{i,j}(u,v)$ et respectivement $DC^{D}_{i,j}$ et $AC^{D}_{i,j}(u,v)$ sont les coefficients transformés de chacun des deux blocs de codage adjacents (21, 22) partiellement couverts par le bloc d'analyse, et $Nill(u,v)$ est une fonction de masquage modélisant un masquage par voisinage.

**6.** Procédé selon l'une des revendications 2 à 5,
**caractérisé en ce que** la moyenne ($\mu_{i,j}$) et l'écart type ($\sigma_{i,j}$) calculés pour chaque bloc d'analyse ($B_{i,j}$) sont déterminés à partir des coefficients transformés ($DC_{i,j}$, $AC_{i,j}(u,v)$) de chacun des deux blocs de codage (21, 22) adjacents partiellement couverts par le bloc d'analyse.

**7.** Procédé selon l'une des revendications 2 à 6,
**caractérisé en ce que** le facteur de pondération ($w_{i,j}$) est obtenu par la formule suivante :

$$w_{i,j}(\mu_{i,j}, \sigma_{i,j}, \zeta) = \begin{cases} \lambda \ln\left(1 + \dfrac{\sqrt{\mu_{i,j}}}{1 + \sigma_{i,j}}\right) & \text{si } \mu_{i,j} \leq \zeta \\ \ln\left(1 + \dfrac{\sqrt{255 - \zeta}}{1 + \sigma_{i,j}}\right) & \text{sinon,} \end{cases}$$

où

$$\lambda = \frac{\ln\left(1 + \dfrac{\sqrt{255 - \zeta}}{1 + \sigma_{i,j}}\right)}{\ln\left(1 + \dfrac{\sqrt{\zeta}}{1 + \sigma_{i,j}}\right)}$$

$\mu_{i,j}$ et $\sigma_{i,j}$ sont respectivement la moyenne et l'écart type calculés pour chaque bloc d'analyse ($B_{i,j}$), et $\zeta$ est un paramètre correspondant au maximum de la sensibilité de l'oeil humain.

**8.** Procédé selon l'une des revendications 1 à 7,
**caractérisé en ce que** préalablement à l'estimation d'un indicateur de dégradation $\upsilon_{i,j}$ pour chaque bloc d'analyse ($B_{i,j}$), on effectue une sélection des blocs d'analyse susceptibles de contenir un effet de bloc.

**9.** Procédé selon la revendication 8,
**caractérisé en ce que** la sélection préalable comprend une étape consistant à écarter les blocs d'analyse ($B_{i,j}$) dont les coefficients de transformés extraits sont supérieurs à un seuil prédéfini.

**10.** Procédé selon la revendication 8 ou 9,
**caractérisé en ce que** la sélection préalable comprend une étape consistant à sélectionner les blocs d'analyse ($B_{i,j}$) ayant, au niveau de la frontière inter bloc (23) de la grille de codage, couverte par le bloc d'analyse, des pixels ($I_{i,j}(x,y)$) présentant une énergie représentant une proportion significative de l'énergie du bloc.

**11.** Procédé selon l'une des revendications 1 à 10,
**caractérisé en ce que** le décalage de la grille de codage est effectué horizontalement par rapport à l'image codée.

**12.** Procédé selon l'une des revendications 1 à 11,
**caractérisé en ce que** le décalage de la grille de codage est effectué verticalement par rapport à l'image codée.

**13.** Procédé selon l'une des revendications 1 à 12,
**caractérisé en ce que** le calcul de transformée par blocs est un calcul de transformée en cosinus discrète.

**14.** Système de mesure des dégradations d'une image numérisée, introduites par un codage de l'image,
**caractérisé en ce qu'**il comprend des moyens de calcul pour mettre en oeuvre le procédé selon l'une des revendications 1 à 13.

**Claims**

1. Method for measuring degradations of a digitized image introduced when coding the image, said method consisting of dividing the image into coding blocks using a coding grid and applying a coding processing on pixel data in each block, making use of a block transform calculation and an inverse block transform calculation, **characterized in that** it includes the following steps:

   - determining (11) the coding grid of the coded image, in order to find the image division into coding blocks, used when coding the image,
   - shifting (12) the coding grid with respect to the coded image, so as to define an image division into analysis blocks ($B_{i,j}$) each covering a boundary (23) between two adjacent coding blocks (21, 22),
   - applying (13) the block transform calculation to pixel data ($f_{i,j}(x,y)$) in the coded image using the shifted coding grid to obtain transformed coefficients ($DC_{i,j}$, $AC_{i,j}(u,v)$) for each analysis block ($B_{i,j}$) defined by the shifted coding grid,
   - extracting (14) coefficients that could be affected by a block effect resulting from coding of the image, from the transformed coefficients,
   - applying (15) the inverse block transform calculation to the extracted transformed coefficients to determine the pixel data ($I_{i,j}(x,y)$) for each analysis block,
   - for each analysis block, estimating (17) an indicator ($u_{i,j}$) of the degradation due to block effects, using pixel data ($f_{i,j}(x,y)$) in the coded image and pixel data ($I_{i,j}(x,y)$) in each analysis block, obtained by the inverse transform calculation, and
   - determining (17) an image degradation measurement ($\upsilon$) by summing the degradation indicators ($\upsilon_{i,j}$) of each analysis block.

2. Method according to claim 1, **characterized in that** the estimation of a degradation indicator ($\upsilon_{i,j}$) for each analysis block ($B_{i,j}$) comprises steps of:

   - calculating an average of inter pixel differences ($\Delta I_{i,j}$) at the inter block boundary (23) of the coding grid, covered by the analysis block, using pixel data ($I_{i,j}(x,y)$) obtained for the analysis block,
   - calculating an average ($\mu_{i,j}$) and a standard deviation ($\sigma_{i,j}$) applicable to pixels in the two adjacent blocks (21, 22) on the coding grid, partially covered by the analysis block,
   - calculating a weighting factor ($w_{i,j}$) as a function of the average and the standard deviation obtained for the analysis block, and
   - calculating a spatial activity ($ACT_{i,j}$) of the analysis block using spatial activities ($ACT^G_{i,j}$ $ACT^D_{i,j}$) determined for each of the two adjacent blocks (21, 22) in the coding grid partially covered by the analysis block,
   - the analysis block degradation indicator being determined as a function of the calculated average of inter pixel differences, the weighting factor and the spatial activity of the block.

3. Method according to claim 2, **characterized in that** the analysis block degradation indicator is obtained using the following formula:

$$\upsilon_{i,j} = \frac{\Delta I_{i,j} w_{i,j}}{1 + \psi \left| ACT_{i,j} \right|}$$

   in which $\Delta I_{i,j}$ is the average of inter pixel differences at the inter block boundary (23) of the coding grid covered by the analysis block, $w_{i,j}$ is the weighting factor, $\psi$ is a predefined constant, and $ACT_{i,j}$ is the spatial activity of the analysis block.

4. Method according to either claim 2 or 3, **characterized in that** the transform calculation is applied to coding blocks of the coded image, the spatial activities ($ACT^G_{i,j}$ $ACT^D_{i,j}$) determined for each of the two coding blocks (21, 22) being obtained from the transformed coefficients ($DC_{i,j}$, $AC_{i,j}(u,v)$) for each of the two coding blocks.

5. Method according to claim 4, **characterized in that** the spatial activities ($ACT^G_{i,j}$ $ACT_{i,j}^D$) determined for each of the two coding blocks (21, 22) are obtained from the following formulas:

$$ACT_{i,j}^{G} = \frac{1}{1+DC_{i,j}^{G}} \sqrt{\sum_{\substack{u,v=0 \\ u+v \neq 0}}^{7} \left[AC_{i,j}^{G}(u,v)Nill(u,v)\right]^2}$$

$$ACT_{i,j}^{D} = \frac{1}{1+DC_{i,j}^{D}} \sqrt{\sum_{\substack{u,v=0 \\ u+v \neq 0}}^{7} \left[AC_{i,j}^{D}(u,v)Nill(u,v)\right]^2}$$

in which $DC_{i,j}^{G}$ and $AC_{i,j}^{G}$ (u, v) and $DC_{i,j}^{D}$ and $AC_{i,j}^{D}$(u, v) are the transformed coefficients for each of the two adjacent coding blocks (21, 22) partially covered by the analysis block, and Nill(u,v) is a masking function modelling masking by neighbourhood.

6. Method according to one of claims 2 to 5, **characterized in that** the average ($\mu_{i,j}$) and standard deviation ($\sigma_{i,j}$) calculated for each analysis block ($B_{i,j}$) are determined from transformed coefficients ($DC_{i,j}$, $AC_{i,j}(u,v)$) for each of the two adjacent coding blocks (21, 22) partially covered by the analysis block.

7. Method according to one of claims 2 to 6, **characterized in that** the weighting factor ($w_{i,j}$) is obtained by the following formula:

$$w_{i,j}(\mu_{i,j},\sigma_{i,j},\zeta) = \begin{cases} \lambda\ln\left(1+\frac{\sqrt{\mu_{i,j}}}{1+\sigma_{i,j}}\right) \text{ if } \mu_{i,j} \leq \zeta \\ \ln\left(1+\frac{\sqrt{255-\zeta}}{1+\sigma_{i,j}}\right) \text{ else,} \end{cases}$$

in which

$$\lambda = \frac{\ln\left(1+\frac{\sqrt{255-\zeta}}{1+\sigma_{i,j}}\right)}{\ln\left(1+\frac{\sqrt{\zeta}}{1+\sigma_{i,j}}\right)}$$

$\mu$i,j and $\sigma_{i,j}$ are the average and standard deviation respectively calculated for each analysis block ($B_{i,j}$) and $\zeta$ is a parameter corresponding to the maximum sensitivity of the human eye.

8. Method according to one of claims 1 to 7, **characterized in that** analysis blocks that could contain a block effect are selected before estimating a degradation indicator ($\upsilon_{i,j}$) for each analysis block ($B_{i,j}$).

9. Method according to claim 8, **characterized in that** the prior selection comprises a step consisting of separating analysis blocks ($B_{i,j}$) for which the extracted transformed coefficients are greater than a predetermined threshold.

10. Method according to either claim 8 or 9, **characterized in that** the prior selection comprises a step consisting of selecting analysis blocks ($B_{i,j}$) with pixels ($I_{i,j}(x,y)$) with an energy representing a significant proportion of the energy of the block, at the inter block boundary (23) of the coding grid covered by the analysis block.

**11.** Method according to one of claims 1 to 10, **characterized in that** the coding grid is shifted horizontally with respect to the coded image.

**12.** Method according to one of claims 1 to 11, **characterized in that** the coding grid is shifted vertically with respect to the coded image.

**13.** Method according to one of claims 1 to 12, **characterized in that** the block transform calculation is a discrete cosine transform calculation.

**14.** System for measuring degradations of a digitized image introduced when coding the image, **characterized in that** it comprises calculation means for implementing the method according to one of claims 1 to 13.

**Patentansprüche**

**1.** Verfahren zum Messen von Verschlechterungen eines digitalisierten Bildes, die durch eine Kodierung des Bildes hervorgerufen werden, die sich aus einem Aufgliedern des Bildes in Kodierungsblöcke gemäß einem Kodierungsraster und aus dem Unterziehen einer Kodierungsbehandlung auf Pixeldaten jedes Blocks zusammensetzt, welche Kodierungsbehandlung eine Transformationsberechnung durch Blöcke und eine Transformationsberechnung durch einen inversen Block verwendet, **dadurch gekennzeichnet, daß**:

- das Kodierungsraster des kodierten Bildes bestimmt wird (11), um die Aufgliederung des Bildes in Kodierungsblöcke wiederzufinden, welche Aufgliederung beim Kodieren des Bildes verwendet wird.
- das Kodierungsraster bezüglich des kodierten Bildes verschoben wird (12), so daß eine Aufgliederung des Bildes in Analyseblöcke ($B_{i,j}$) definiert wird, wobei jeder eine Grenze (23) zwischen zwei benachbarten Kodierungsblöcken (21, 22) abdeckt,
- die Transformationsberechnung durch Blöcke auf die Pixeldaten ($f_{i,j}(x,y)$) des kodierten Bildes angewendet wird, indem das Kodierungsraster verwendet wird, das verschoben wird, um Transformationskoeffizienten ($DC_{i,j}$, $AC_{i,j}(u,v)$) für jeden Analyseblock ($B_{i,j}$) zu erhalten, der durch das verschobene Kodierungsraster definiert ist.
- aus den Transformationskoeffizienten Koeffizienten extrahiert werden, die dazu geeignet sind, durch eine Blockwirkung beeinflußt zu werden, die sich aus der Kodierung des Bildes ergibt,
- auf die extrahierten Transformationskoeffizienten die Transformationsberechnung durch einen inversen Block angewendet wird, um die Pixeldaten ($I_{i,j}(x,y)$) jedes Analyseblocks zu bestimmen,
- für jeden Analyseblock einen Verschlechterungsindikator ($v_{i,j}$) wegen der Blockwirkungen ausgehend von den Pixeldaten ($f_{i,j}(x,y)$) des kodierten Bildes und von Pixeldaten ($I_{i,j}(x,y)$) jedes Analyseblocks geschätzt wird, die durch die inverse Transformationsberechnung erhalten werden, und
- eine Messung der Verschlechterung ($v_{i,j}$) des Bildes ausgehend von den Verschlechterungsindikatoren ($v_{i,j}$) jedes Analyseblocks bestimmt wird (17).

**2.** Verfahren nach Anspruch 1, **dadurch gekennzeichnet, daß** beim Schätzen eines Verschlechterungsindikators ($v_{i,j}$) für jeden Analyseblock ($B_{i,j}$):

- ausgehend von den Pixeldaten ($I_{i,j}(x,y)$), die für den Analyseblock erhalten werden, ein Mittelwert von Inter-Pixel-Unterschieden ($\Delta I_{i,j}$) im Hinblick auf die Interblockgrenze (23) des Kodierungsrasters berechnet wird, die von dem Analyseblock abgedeckt wird,
- ein Mittelwert ($\mu_{i,j}$) und eine Standardabweichung ($\sigma_{i,j}$), die an den Pixeln der beiden benachbarten Blöcke (21, 22) des Kodierungsrasters vorliegen, die teilweise durch den Analyseblock abgedeckt werden, berechnet werden,
- ein Gewichtungsfaktor ($w_{i,j}$) abhängig von dem Mittelwert und von der Standardabweichung berechnet wird, die für den Analyseblock erhalten werden, und
- eine Raumaktivität ($ACT_{i,j}$) des Analyseblocks ausgehend von Raumaktivitäten ($ACT^G_{i,j}$, $ACT^D_{i,j}$) berechnet wird, die für jeden der beiden, benachbarten Blöcke (21, 22) des Kodierungsrasters bestimmt werden, die teilweise von dem Analyseblock abgedeckt werden, wobei der Verschlechterungsindikator des Analyseblocks in Abhängigkeit von dem Mittelwert bestimmt wird, der aus den Inter-Pixel-Unterschieden, dem Gewichtungsfaktor und der Raumaktivität des Blocks errechnet wird.

**3.** Verfahren nach Anspruch 2, **dadurch gekennzeichnet, daß** der Verschlechterungsindikator eines Analyseblocks mit der Hilfe der folgenden Gleichung erhalten wird:

$$\upsilon_{i,j} = \frac{\Delta I_{i,j} w_{i,j}}{1 + \psi \lceil ACT_{i,j} \rceil}$$

bei der $\Delta I_{i,j}$ der Mittelwert für die Inter-Pixel-Unterschiede hinsichtlich der Inter-BlockGrenze (23) des Kodierungsrasters ist, die von dem Analyseblock bedeckt wird, wobei $w_{i,j}$ der Gewichtungsfaktor, $\Psi$ eine vordefinierte Konstante und $ACT_{i,j}$ die Raumaktivität des Analyseblocks sind.

4. Verfahren nach Anspruch 2 oder 3, **dadurch gekennzeichnet, daß** die Transformationsberechnung auf die Kodierungsblöcke des kodierten Bildes angewendet wird, wobei die für jeden der beiden Kodierungsblöcke (21, 22) bestimmten Raumaktivitäten ($ACT^G_{i,j}$, $ACT^D_{i,j}$) ausgehend von den Transformationskoeffizienten ($DC_{i,j}$, $AC_{i,j}(u,v)$) jeder der beiden Kodierungsblöcke erhalten werden.

5. Verfahren nach Anspruch 4, **dadurch gekennzeichnet, daß** die Raumaktivitäten ($ACT^G_{i,j}$, $ACT^D_{i,j}$), die für jeden der beiden Kodierungblöcke (21, 22) bestimmt werden, durch die folgenden Gleichungen erhalten werden:

$$ACT^G_{i,j} = \frac{1}{1 + DC^G_{i,j}} \sqrt{\sum_{\substack{u,v=0 \\ u+v \neq 0}}^{7} \left[ AC^G_{i,j}(u,v) Nill(u,v) \right]^2}$$

$$ACT^D_{i,j} = \frac{1}{1 + DC^D_{i,j}} \sqrt{\sum_{\substack{u,v=0 \\ u+v \neq 0}}^{7} \left[ AC^D_{i,j}(u,v) Nill(u,v) \right]^2} ,$$

bei denen $DC^G_{i,j}$ und $AC^G_{i,j}(u,v)$ bzw. $DC^D_{i,j}$ und $AC^D_{i,j}(u,v)$ die Transformationskoeffizienten gemäß der beiden, benachbarten Kodierungsblöcke (21, 22) sind, die teilweise von dem Analyseblock abgedeckt werden, Nill(u, v) eine Überdeckungsfunktion ist, die eine Überdeckung mittels Nachbarschaft oder Umgebung bildet.

6. Verfahren nach einem der Ansprüche 2 bis 5, **dadurch gekennzeichnet, daß** der Mittelwert $\mu_{i,j}$ und die Standardabweichung ($\sigma_{i,j}$), die durch jeden Analyseblock ($B_{i,j}$) berechnet sind, ausgehend von den Transformationskoeffizienten ($DC_{i,j}$, $AC_{i,j}(u,v)$) jedes der beiden benachbarten Kodierungsblöcken (21, 22) bestimmt wird, die teilweise durch den Analyseblock abgedeckt werden.

7. Verfahren nach einem der Ansprüche 2 bis 6, **dadurch gekennzeichnet, daß** der Gewichtungsfaktor ($w_{i,j}$) durch die folgende Gleichung erhalten wird:

$$w_{i,j}(\mu_{i,j}, \sigma_{i,j}, \zeta) = \begin{cases} \lambda \ln\left(1 + \dfrac{\sqrt{\mu_{i,j}}}{1 + \sigma_{i,j}}\right) & \text{falls } \mu_{i,j} \leq \xi \\[4mm] \ln\left(1 + \dfrac{\sqrt{255 - \zeta}}{1 + \sigma_{i,j}}\right) & \text{falls nicht} \end{cases}$$

wobei

$$\lambda = \frac{\ln\left(1+\frac{\sqrt{255-\zeta}}{1+\sigma_{i,j}}\right)}{\ln\left(1+\frac{\sqrt{\zeta}}{1+\sigma_{i,j}}\right)},$$

wobei $\mu_{i,j}$ und $\sigma_{i,j}$ den Mittelwert bzw. die Standardabweichung sind, die für jeden Analyseblock ($B_{i,j}$) berechnet werden, und $\xi$ ein Parameter ist, der dem Maximum der Empfindlichkeit des menschlichen Auges entspricht.

8. Verfahren nach einem der Ansprüche 1 bis 7, **dadurch gekennzeichnet, daß** vor dem Schätzen eine Verschlechterungsindikators $\upsilon_{i,j}$ für jeden Analyseblock ($B_{i,j}$) eine Auswahl an Analyseblöcken durchgeführt wird, die einen Blockeffekt enthalten können.

9. Verfahren nach Anspruch 8, **dadurch gekennzeichnet, daß** die Vorauswahl einen Verfahrenschritt umfaßt, bei dem die Analyseblöcke ($B_{i,j}$) entfernt werden, deren extrahierte Transformationskoeffizienten größer als eine vordefinierte Schwelle sind.

10. Verfahren nach Anspruch 8 oder 9, **dadurch gekennzeichnet, daß** die Vorauswahl einen Verfahrensschritt umfaßt, bei dem die Analyseblöcke ($B_{i,j}$) ausgewählt werden, die hinsichtlich der Inter-Blockgrenze (23) des Kodierungsrasters, die durch den Analyseblock abgedeckt wird, Pixel ($I_{i,j}(x,y)$) aufweist, die eine Energie umfassen, die einen erheblichen Anteil der Energie des Blockes bildet.

11. Verfahren nach einem der Ansprüche 1 bis 10, **dadurch gekennzeichnet, daß** die Verschiebung des Kodierungsrasters horizontal bezüglich des kodierten Bildes durchgeführt wird.

12. Verfahren nach einem der Ansprüche 1 bis 11, **dadurch gekennzeichnet, daß** die Verschiebung des Gliederungsrasters vertikal bezüglich des kodierten Bildes durchgeführt wird.

13. Verfahren nach einem der Ansprüche 1 bis 12, **dadurch gekennzeichnet, daß** die Transformationsberechnung durch Blöcke eine diskrete Kosinus-Transformationsberechnung ist.

14. System zum Messen von Verschlechterungen eines digitalisierten Bildes, die durch eine Bildkodierung hervorgerufen werden, **dadurch gekennzeichnet, daß** es eine Berechnungseinrichtung zum Durchführen des Verfahrens gemäß einem der Ansprüche 1 bis 13 umfasst.

Images
originales → Codage → Images codées          Fig. 1

10

Système de mesure
de dégradations → Mesure
dégradations

1

Système de mesure de dégradations

DCT

2

16

17

Images
codées → Synchro.
grille de
codage

Détection
effet
de bloc → Mesure
dégradations

11

12

Décalage
d'1/2 bloc

3

13

14

15

DCT → Extraction
Fréquences → DCT⁻¹

Fig. 2

1

24    25

23

21          $B_{i,j}$                                    22

Fig. 3

Fig. 4

Fig. 5

Fig. 6

Fig. 7